# EUROPÄISCHE PATENTSCHRIFT

(11) **EP 0 712 359 B1**
(45) Veröffentlichungstag und Bekanntmachung des Hinweises auf die Patenterteilung: **11.11.1998**
(21) Anmeldenummer: 94925433.8
(22) Anmeldetag: 05.08.1994
(51) Int. Cl.: B60T 8/36

(54) **ELEKTROHYDRAULISCHE DRUCKREGELVORRICHTUNG**
ELECTROHYDRAULIC PRESSURE-CONTROL DEVICE
REGULATEUR DE PRESSION ELECTRO-HYDRAULIQUE

(30) Priorität: 19.08.1993 DE 4327887
(43) Veröffentlichungstag der Anmeldung: 22.05.1996
(73) Patentinhaber: ITT Automotive Europe GmbH, 60488 Frankfurt am Main (DE)
(72) Erfinder: VELLMER, Arnim, D-60599 Frankfurt (DE)
(86) Internationale Anmeldenummer: EP9402602
(87) Internationale Veröffentlichungsnummer: WO9505301

(56) Entgegenhaltungen:
- EP-A- 0 373 551
- EP-A- 0 539 770
- WO-A-89/10286
- WO-A-92/08630
- WO-A-92/12878
- DE-A- 4 232 205

## Beschreibung

Die Erfindung betrifft eine elektrohydraulische Druckregelvorrichtung, insbesondere Bremsdruckregelvorrichtung nach dem Oberbegriff des Anspruchs 1.

Eine elektrohydraulische Druckregelvorrichtung der gattungsbildenden Art wird beispielhaft in der internationalen Veröffentlichung WO 92/12878 beschrieben, wonach über die bereits hinreichend bekannte Blockbauweise des Ventilaufnahmekörpers hinaus der Deckel mittels eines plattenförmigen Trägerelementes unterteilt ist, um einerseits Teile eines elektronischen Reglers, z.B. Leiterbahnen, IC-Bausteine, aufzunehmen, andererseits die elektrische Verbindung zwischen den elektronischen Reglerbauteilen und den an den Elektromagnetventilen überstehenden Kontaktelementen herzustellen. Der Deckel ist mit den Spulen der Elektromagnetventile auf die Ventildome des Ventilaufnahmekörpers aufgesteckt, wobei zur Herstellung des elektrischen Anschlusses zwischen den Kontaktelementen und den im Deckel integrierten elektronischen bzw. elektrischen Komponenten Steckkontakte ineinander greifen. Zur Befestigung der Spulen am Trägerelement wird vorgeschlagen, elastische Halterungen, beispielsweise Federn zu verwenden oder die Spulen in einem elastischen Formkörper einzubetten. Die Plazierung und Befestigung der Reglerbauteile sowie der Spulen ist infolge der Packungsdichte und Gestaltung des Deckels im Hinblick auf eine möglichst gute maschinelle Fertigung (automatengerecht) zu vereinfachen.

Die Druckschrift WO 92/08630 zeigt eine auf der Oberseite des Deckels aufgesetzte Abdeckung, die die Leiterbahnen oberhalb des Trägerelementes zu schützen vermag. Die Leiterbahnen sind gegenüber der Abdeckungsanordnung beabstandet und sind zusammen mit der Leiterbahnplatte gegenüber den Kontakstiften auszurichten, bevor ein Überstülpen dieser Leiterbahn-Baugruppe auf mehrere den Boden des Deckels abdichtende sowie die Kontaktstifte der Ventilspulen umgreifende elastische Halteelemente möglich ist. Der Boden des Deckels übernimmt somit die Funktion des Trägerelementes.

Es ist folglich die Aufgabe der Erfindung, die aus dem genannten Stand der Technik bekannte Druckregelvorrichtung derart zu gestalten, daß eine leicht zugängliche, kompakte sowie funktionsoptimierte Vereinigung der Spulen mit dem Trägerelement und den Reglerbauteilen gewährleistet ist, die möglichst einfach im Deckel zu intergrieren und zu prüfen sind, wobei unterschiedliche Wärmedehnungen der Bauteile möglichst spannungsfrei aufgenommen werden sollen.

Die Aufgabe wird erfindungsgemäß durch die kennzeichnenden Merkmale des Patentanspruchs 1 gelöst.

Weitere Merkmale, Vorteile und Anwendungsmöglichkeiten gehen aus der folgenden Darstellung eines Ausführungsbeispiels hervor.

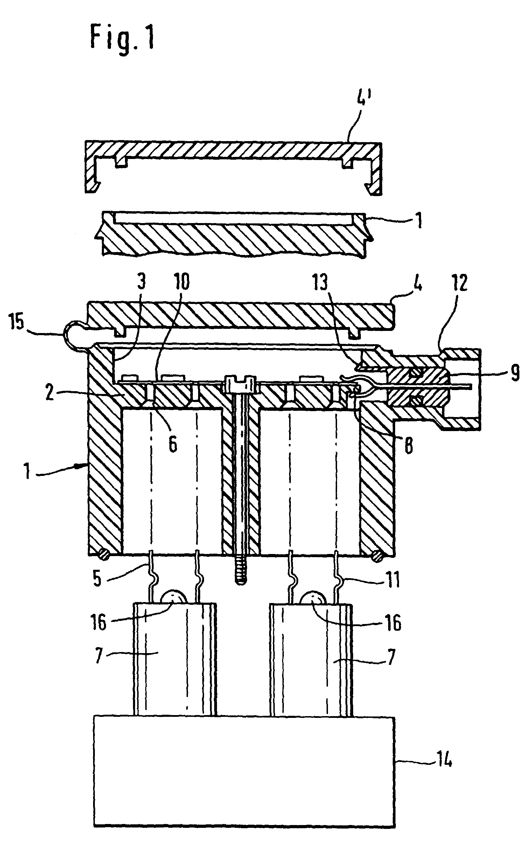

Die Figur 1 zeigt eine Seitenansicht der erfindungsgemäßen Druckregelvorrichtung mit einer Skizzierung der Grundkomponenten. Die Druckregelvorrichtung besteht in einer ersten Ausführungsform aus einem im Profilschnitt gezeigten, im wesentlichen rechteckförmigen Deckel 1, der aus einem mehrere elektrische Leiterbahnen 10 aufweisenden Trägerelement 2 und einem darüber auf einen Rahmen 3 aufgesetzten und mittels Filmscharniere 15 befestigten Abdeckung 4 gebildet ist.

In der Zeichnung oberhalb der beschriebenen ersten Ausführungsform der Abdeckung 4 ist eine weitere alternative Ausführungsform der Rahmenabdeckung dargestellt, wonach die Abdeckung 4' mittels Rasthaken formschlüssig in die Berandung des Rahmens 3 eingreifen kann. Zur Aufnahme von elektrischen Komponenten kann zwischen dem Trägerelement 2 und der Abdeckung (4) innerhalb des Rahmens 3 eine Adapterplatte vorzugsweise verrastbar gehalten sein.

Unabhängig von der gewählten Einzelbetrachtung der beiden Ausführungsvarianten zur Rahmenabdeckung, ist das Trägerelement 2 als im wesentlichen horizontal auf die Kontaktelemente 5 der Spulen 7 aufgesetzte bzw. übergestülpte Rahmenplatte ausgeführt, die auf ihrer Unterseite trichterförmig erweiterte Durchbrüche 6 aufweist, die das Einfädeln der Kontaktelemente 5 erleichtern. Die elektrische Leiterbahnen 10 sind vorzugsweise durch ein Heißprägeverfahren (Kupferfolien-Prägerverfahren) im Trägerelement 2 eingelassen. Die Kontaktelemente 5 sind abschnittsweise mit einer Kröpfung 11 versehen, die eine elastische Befestigung am Trägerelement 2 gewährleisten. Die elektrischen Leiterbahnen 10 erstrecken sich am Trägerelement 2 bis zu einem als Vorsprung 8 ausgeformten Bereich, an dem ein elektrischer Stecker 9 angreift. Der elektrische Stecker 9 ist als Zwischensteckverbinder ausgeführt, der mit seinen zungenförmigen Kontakten auf dem Vorsprung 8 aufgeschoben ist. Das Steckergehäuse des Zwischensteckverbinders ist in der im Deckel 1 eingeformten Steckeraufnahme 12 abgedichtet und mittels Rasthaken 13 im Rahmen-/Deckelbereich befestigt. Der blockförmige Ventilaufnahmekörper 14 ist entweder aus Stahl oder Leichtmetall gefertigt und mit Ventildomen 16 versehen. Über den in zwei parallelen Reihen angeordneten Ventildomen 16 befinden sich die am Trägerelement 2 befestigten Spulen 7. Da das Trägerelement 2 als Formleiterplatte gestaltet ist, kann die an die Leiterbahnen 10 angegliederte elektrische Steckverbindung vorzugsweise als homogenes Bestandteil des Trägerelementes 2 bzw. des Deckels 1 - zwecks Anschluß eines peripheren Kabelstrangs - angeformt sein. Die Kontaktelemente 5 der Spulen 7 sind in den Ausstanzungen bzw. den Durchbrüchen 6 im Trägerelement 2 hindurchgeführt und mit den Leiterbahnen 10 verlötet. Die Abdeckung 4, 4' ist unter der Voraussetzung gleicher Werkstoffe (Kunststoff) mit dem Rahmen 3 durch Ultraschallschweißung verbunden oder wie eingangs erwähnt, verrastet.

Zusammenfassend ergibt sich somit vorteilhaft eine Druckregelvorrichtung mit einer homogenen Deckel-, Rahmen- und Abdeckungsanordnung 1, 3, 4, 4' in die auch das Trägerelement 2 mit den Leiterbahnen 10 mit eingespritzt ist. Gleichfalls können alle Durchbrüche 6 und Vorsprünge 8 bzw. Ausnehmungen in einem Arbeitsgang während der Deckelherstellung mit einbezogen werden. Schließmöglichkeiten des Rahmens 3 bestehen entweder über eine durch Filmscharniere 15 am Rahmen 3 gehaltene Abdeckung 4 oder über eine separate Abdeckung 4', die formschlüssig mittels Rasthaken am Rahmen des Deckels 1 eingreift.

Durch die Verwendung einer Rahmen- und Abdeckungskombination ist jederzeit ein ungehinderter Zugang zur Bestückung des Trägerelementes 2 gegeben. Dies schließt unter anderem auch den Lötvorgang der Kontaktelemente 5 an den Leiterbahnen 10 mittels Lötroboter ein, sobald das Trägerelement 2 mit der die Leiterbahnen 10 bildenden Kupferfolie - vorzugsweise im Prägerverfahren hergestellt - bestückt ist und die Kontaktelemente 5 der Spulen 7 (Ventilstiftanschlüsse) die trichterförmigen Durchbrüche 6 im Trägerelement 2 überragen. Die zungenförmigen Kontakte des seitlich in den Deckel eingeführten Steckers 9 sind gabelförmig gespreizt und gleiten hierdurch vorteilhaft auf der am Vorsprung 8 des Trägerelements 2 aufgeprägten Leiterbahn 10. Folglich sind nahezu alle Kontaktstellen von der Deckeloberseite gut zugänglich und maschinell (automatengerecht) herstellbar.

### Bezugszeichenliste

- 1: Deckel
- 2: Trägerelement
- 3: Rahmen
- 4, 4': Abdeckung
- 5: Kontaktelement
- 6: Durchbruch
- 7: Spule
- 8: Vorsprung
- 9: Stecker
- 10: Leiterbahn
- 11: Kröpfung
- 12: Steckeraufnahme
- 13: Rasthaken
- 14: Ventilaufnahmekörpter
- 15: Filmscharnier
- 16: Ventildom

## Patentansprüche

1. Elektrohydraulische Druckregelvorrichtung, insbesondere Bremsdruckregelvorrichtung, wie Antiblockierregelvorrichtung, Antriebsschlupfregelvorrichtung, mit elektromagnetisch betätigbaren Hydraulikventilen (Elektromagnetventilen), die an einem Ventilaufnahmekörper (14) angeordnet sind, mit Spulen (7), die den Ventilaufnahmekörper (14) überragen, wobei die Spulen (7) an ihren den Ventilaufnahmekörper (14) überragenden Teilen mit elektrischen Kontaktelementen (5) versehen sind, mit einem Deckel (1), der die überragenden Spulenteile und die Kontaktelemente (5) abdeckt, mit einem Trägerelement (2) zur Befestigung der Spulen (7) und elektrischen Bauteilen, wobei das Trägerelement (2) innerhalb des Deckels (1) angeordnet ist, und wobei die Oberseite des Deckels (1) das Trägerelement (2) bildet, **gekennzeichnet** durch folgende Merkmale:
- Der Deckel (1) besteht aus einem mehrere elektrische Leiterbahnen (10) aufweisenden Trägerelement (2) und einer über dem Trägerelement (2) auf einem Rahmen (3) aufgesetzten Abdeckung (4), die den Rahmen (3) verschließt, wobei durch die Rahmen- Abdeckungskombination ein ungehinderter zugang zur Bestückung des Trägerelementes (2) gegeben ist,
- der Rahmen (3) begrenzt das an der Oberseite des Deckels (1) angeordnete Trägerelement (2),
- die Kontaktelemente (5) der Spulen (7) sind von der Oberseite des Deckels (1) bei abgenommener Abdeckung (4) zugänglich.

2. Elektrohydraulische Druckregelvorrichtung nach Anspruch 1, dadurch **gekennzeichnet,** daß zur Aufnahme der Kontaktelemente (5) das Trägerelement (2) mit mehreren Durchbrüchen (6) versehen ist, die in Richtung der Kontaktelemente (5) der Spulen (7) trichterförmig erweitert sind.

3. Elektrohydraulische Druckregelvorrichtung nach Anspruch 1 oder 2, dadurch **gekennzeichnet,** daß das Trägerelement (2) eine zu einem als Vorsprung (8) ausgeformte Ausnehmung aufweist, an der ein elektrischer Stecker (9) befestigbar ist.

4. Elektrohydraulische Druckregelvorrichtung nach Anspruch 3, dadurch **gekennzeichnet,** daß das Trägerelement (2) auf der Oberseite des Deckels (1) mit elektrischen Leiterbahnen (10) versehen sind, die eine Verbindung zu dem am Vorsprung (8) angeordneten elektrischen Stecker (9) aufweisen.

5. Elektrohydraulische Druckregelvorrichtung nach einem der vorhergehenden Ansprüche, dadurch **gekennzeichnet,** daß die aus den Spulen (7) hervorstehenden Kontaktelemente (5) abschnittsweise eine Abkröpfung (11) aufweisen.

6. Elektrohydraulische Druckregelvorrichtung nach Anspruch 1, dadurch **gekennzeichnet,** daß die Abdeckung (4, 4') formschlüssig in den Rahmen (3) eingreift und das Trägerelement (2) verschließt.

7. Elektrohydraulische Druckregelvorrichtung nach Anspruch 6, dadurch **gekennzeichnet,** daß die Abdeckung (4) mit dem Rahmen (3) durch ein Filmscharnier (15) verbunden ist.

8. Elektrohydraulische Druckregelvorrichtung nach Anspruch 5, dadurch **gekennzeichnet,** daß eine Adapterplatte zur Aufnahme von elektrischen Komponenten zwischen dem Trägerelement (2) und der Abdeckung (4) innerhalb des Rahmens (3) vorzugsweise verrastbar gehalten ist.

9. Elektrohydraulische Druckregelvorrichtung nach einem der vorhergehenden Ansprüche 1 bis 8, dadurch **gekennzeichnet,** daß der Deckel (1), das Trägerelement (2), der Rahmen (3) und die Abdeckung (4, 4') durch ein Kunststoffspritzverfahren hergestellt sind.

10. Elektrohydraulische Druckregelvorrichtung nach mindestens einem der vorhergehenden Ansprüche, dadurch **gekennzeichnet,** daß die Abdeckung (4) durch Ultraschallschweißung am Rahmen (3) befestigt ist.

## Claims

1. Electrohydraulic pressure control device, in particular a braking pressure control device, such as an anti-lock control device or a traction slip control device, including electromagnetically operable hydraulic valves (solenoid valves) which are mounted on a valve accommodating member (14), coils (7) projecting from the valve accommodating member (14), the coils (7) having electric contact elements (5) on their parts which project from the valve accommodating member (14), a lid (1) which covers the projecting coil parts and the contact elements (5), a carrier element (2) for attaching the coils (7) and the electric component parts, and the carrier element (2) is arranged inside the lid (1) and the top side of the lid (1) forms the carrier element (2),
**characterized** by the following features:
- the lid (1) comprises a carrier element (2) having a plurality of electric conducting paths (10) and a cover (4) seated above the carrier element (2) on a frame (3) and closing the frame (3), the combination of frame and cover providing an unhindered access for the equipment of the carrier element (2) when the cover (4) is removed,
- the frame (3) confines the carrier element (2) arranged on the top side of the lid (1),
- the contact elements (5) of the coils (7) are accessible from the top side of the lid (1) when the cover (4) is removed.

2. Electrohydraulic pressure control device as claimed in claim 1,
**characterized** in that for accommodating the contact elements (5), the carrier element (2) has a plurality of apertures (6) which enlarge like a funnel in the direction of the contact elements (5) of the coils (7).

3. Electrohydraulic pressure control device as claimed in claim 1 or claim 2,
**characterized** in that the carrier element (2) has a recess formed as a projection (8) to which an electric plug (9) can be attached.

4. Electrohydraulic pressure control device as claimed in claim 3,
**characterized** in that, on the top side of the lid (1), the carrier element (2) includes electric conducting paths (10) which have a connection to the electric plug (9) arranged on the projection (8).

5. Electrohydraulic pressure control device as claimed in any one of the preceding claims,
**characterized** in that the contact elements (5) projecting from the coils (7) have an offset (11) in a section.

6. Electrohydraulic pressure control device as claimed in claim 1,
**characterized** in that the cover (4, 4') is positively engaged in the frame (3) and closes the carrier element (2).

7. Electrohydraulic pressure control device as claimed in claim 6,
**characterized** in that the cover (4) is connected to the frame (3) by a foil hinge (15).

8. Electrohydraulic pressure control device as claimed in claim 5,
**characterized** in that an adapter plate for accommodating electric components is retained between the carrier element (2) and the cover (4) within the frame (3), preferably in a latchable fashion.

9. Electrohydraulic pressure control device as claimed in any one of the preceding claims 1 to 8,
**characterized** in that the lid (1), the carrier element (2), the frame (3) and the cover (4, 4') are manufactured by plastic injection-molding.

10. Electrohydraulic pressure control device as claimed in at least one of the preceding claims,
**characterized** in that the cover (4) is attached to the frame (3) by ultrasonic welding.

## Revendications

1. Dispositif électro-hydraulique de régulation de pression, en particulier dispositif régulateur de pression de freinage tel qu'un dispositif de régulation anti-blocage des roues ou un dispositif de régulation anti-patinage en traction, comportant des soupapes hydrauliques à commande électromagnétique (électrovannes> , qui sont disposées sur un corps porte-soupapes (14), comportant des bobines (7) qui dépassent du corps porte-soupapes (14), les bobines (7) étant pourvues, à la partie dépassant du corps porte-soupapes (14), d'éléments connecteurs électriques (5), comportant un couvercle (1) qui recouvre les parties saillantes des bobines et les éléments connecteurs (5), comportant un élément de support (2) pour la fixation des bobines (7) et de composants électriques, l'élément de support (2) étant disposé à l'intérieur du couvercle (1) et le haut du couvercle (1) constituant l'élément de support (2),
caractérisé par les particularités suivantes:
- le couvercle (1) est constitué d'un élément de support (2) portant plusieurs pistes conductrices (10) et d'un capot (4) monté sur un cadre (3) au-dessus de l'élément de support (2), le capot refermant le cadre (3), la combinaison cadre - capot offrant un accès non entravé pour l'équipement de l'élément de support (2);
- le cadre (3) délimite l'élément de support (2) aménagé à la face supérieure du couvercle (1);
- les éléments connecteurs (5) des bobines (7) sont accessibles depuis le haut du couvercle (1) lorsque le capot (4) a été enlevé.

2. Dispositif électro-hydraulique de régulation de pression selon la revendication 1, caractérisé en ce que, pour accueillir les éléments connecteurs (5), l'élément de support (2) est pourvu de plusieurs lumières (6) évasées en forme d'entonnoir en direction des éléments connecteurs (5) des bobines (7).

3. Dispositif électro-hydraulique de régulation de pression selon la revendication 1 ou 2, caractérisé en ce que l'élément de support (2) comporte un évidement formant une saillie (8) sur laquelle on peut fixer une prise électrique (9).

4. Dispositif électro-hydraulique de régulation de pression selon le revendication 3, caractérisé en ce que l'élément de support (2) est pourvu, à la face supérieure du couvercle (1), de pistes conductrices électriques (10), qui constituent une liaison électrique avec la prise électrique (9) mise en place sur la saillie (8).

5. Dispositif électro-hydraulique de régulation de pression selon l'une des revendications précédentes, caractérisé en ce que les éléments connecteurs (5) saillant des bobines (7) comportent, par endroits, une ondulation (11).

6. Dispositif électro-hydraulique de régulation de pression selon la revendication 1, caractérisé en ce que le capot (4, 4') s'enclenche par conjugaison des formes sur le cadre (3) et referme l'élément de support (2).

7. Dispositif électro-hydraulique de régulation de pression selon la revendication 6, caractérisé en ce que le capot (4) est relié au cadre (3) par l'intermédiaire d'une charnière en feuille mince (15).

8. Dispositif électro-hydraulique de régulation de pression selon la revendication 5, caractérisé en ce qu'une plaque d'adaptateur destinée à recevoir des composants électriques est retenue, par enclenchement de préférence, entre l'élément de support (2) et le capot (4), à l'intérieur du cadre (3).

9. Dispositif électro-hydraulique de régulation de pression selon l'une des revendications précédentes 1 à 8, caractérisé en ce que le couvercle (1), l'élément de support (2), le cadre (3) et le capot (4, 4') sont fabriqués en mettant en oeuvre un procédé de moulage par injection de matière plastique.

10. Dispositif électro-hydraulique de régulation de pression selon l'une au moins des revendications précédentes, caractérisé en ce que le capot (4) est fixé sur le cadre (3) par soudure par ultrasons.
